# EUROPEAN PATENT APPLICATION

(11) **EP 3 310 090 A1**
(43) Date of publication of application: **18.04.2018**
(21) Application number: 16807475.5
(22) Date of filing: 07.06.2016
(51) Int. Cl.: H04W 24/10, H04J 99/00, H04W 52/24

(54) **USER TERMINAL, WIRELESS BASE STATION, AND WIRELESS COMMUNICATION METHOD**

(30) Priority: 12.06.2015 JP 2015119634
(71) Applicant: NTT Docomo, Inc., Tokyo 100-6150 (JP)
(72) Inventor: BENJEBBOUR, Anass, Tokyo 100-6150 (JP); KISHIYAMA, Yoshihisa, Tokyo 100-6150 (JP)
(74) Representative: Hoffmann Eitle
(86) International application number: PCT/JP2016/066934
(87) International publication number: WO 2016/199768

(57) **Abstract**

To suppress decrease in throughput even in the case where downlink transmit power is controlled, a user terminal according to one aspect of the present invention has a reception section that receives information on a candidate for downlink transmit power, a generating section that selects a plurality of candidates for downlink transmit power to generate CSI (Channel State Information) on the plurality of candidates for downlink transmit power, and a transmission section that transmits the CSI on the plurality of candidates for downlink transmit power.

## Description

### Technical Field

The present invention relates to a user terminal, radio base station and radio communication method in the next-generation mobile communication system.

### Background Art

In UMTS (Universal Mobile Telecommunications System) networks, for the purpose of higher data rates, low delay and the like, Long Term Evolution (LTE) has been specified (Non-patent Document 1). Further, for the purpose of wider bands and higher speed than LTE, successor systems (e.g. also called LTE-A (LTE-Advanced), FRA (Future Radio Access), 4G, 5G and the like) to LTE have been studied.

In LTE/LTE-A, as a downlink radio access scheme, Orthogonal Frequency Division Multiple Access (OFDMA) is used. On the other hand, in the future radio communication systems (from LTE Rel. 13 onward), for the purpose of further increasing the communication capacity, in OFDMA, techniques (MUST: Multiuser Superposition Transmission) have been studied to multiplex signals to a plurality of user terminals into the same radio resources to transmit.

### Citation List

### Non-Patent Literature

Non-patent Literature 1: 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

As a downlink radio access scheme to actualize MUST, considered is Non-Orthogonal Multiple Access (NOMA) based on the premise of interference cancellation on the reception side. In one aspect of NOMA, downlink signals to a plurality of user terminals are superposed on the same radio resources (e.g. time and/or frequency resources), are multiplexed (power-multiplexed) in the power domain, and are transmitted.

NOMA is to control allocation of downlink transmit power (candidates for transmit power) to each user terminal. Herein, it is expected that a proper transmission parameter (precoding matrix and the like) varies, corresponding to allocation of downlink transmit power to each user terminal. Therefore, in using feedback in the existing system based on the premise that maximum transmit power is allocated to a downlink signal of a user terminal, it is not possible to transmit suitable information as feedback, and there is a case that gain of NOMA deteriorates. As a result, there is the risk that the effect of improving system throughput by MUST is suitably not achieved.

The present invention was made in view of such a respect, and it is an object of the invention to provide a user terminal, radio base station and radio communication method for enabling decrease in throughput to be suppressed, even in the case where downlink transmit power is controlled.

### Solution to Problem

A user terminal according to one aspect of the present invention has a reception section that receives information on a candidate for downlink transmit power, a generating section that selects a plurality of candidates for downlink transmit power to generate CSI (Channel State Information) on the plurality of candidates for downlink transmit power, and a transmission section that transmits the CSI on the plurality of candidates for downlink transmit power.

### Advantageous Effects of Invention

According to the present invention, it is possible to suppress decrease in throughput, even in the case where downlink transmit power is controlled.

### Brief Description of Drawings

FIG. 1A is a diagram showing one example of multiplexing of downlink signals in the conventional radio access scheme; FIG. 1B is diagram showing one example of multiplexing of downlink signals in NOMA; FIG. 1C is a diagram showing one example where downlink signals are transmitted using non-orthogonal multiplexing;
FIG. 2 is a diagram showing one example of a configuration of a radio base station (receiver) in NOMA;
FIG. 3A is a diagram showing one example of a configuration of UE#1 in a cell center portion which performs interference cancellation; FIG. 3B is a diagram showing one example of a configuration of UE#2 in a cell edge portion which does not perform interference cancellation;
FIG. 4A is a diagram showing one example of switching between two search range groups corresponding to whether or not CQI is larger than a predetermined threshold; FIG. 4B is a diagram showing one example of switching between two search range groups by comparing CQI with two thresholds (first threshold, second threshold); FIG. 4C is a diagram showing another example of switching between two search range groups corresponding to whether or not CQI is larger than a predetermined threshold;
FIG. 5 is a diagram showing one example of transmission of CSI on a plurality of candidates for transmit power according to Aspect 1;
FIG. 6 is a diagram showing one example of CSI request fields according to Aspect 4;
FIG. 7 is a diagram showing one example of a schematic configuration of a radio communication system according to this Embodiment;
FIG. 8 is a diagram showing one example of an entire configuration of a radio base station according to this Embodiment;
FIG. 9 is a diagram showing one example of a function configuration of the radio base station according to this Embodiment;
FIG. 10 is a diagram showing one example of an entire configuration of a user terminal according to this Embodiment; and
FIG. 11 is a diagram showing one example of a function configuration of the user terminal according to this Embodiment.

### Description of Embodiments

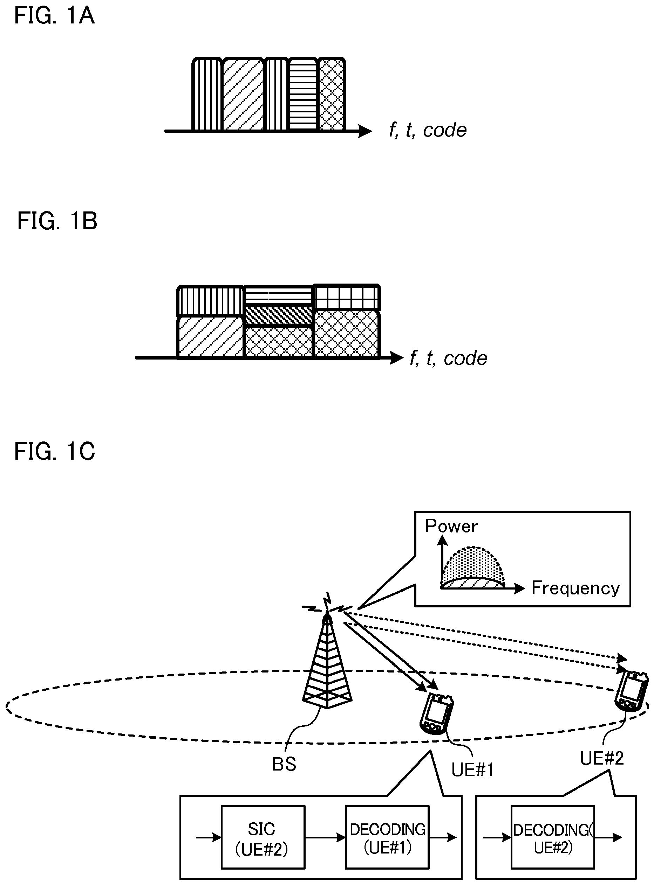

FIG. 1 contains schematic explanatory diagrams of NOMA. In the conventional radio access scheme, as shown in FIG. 1A, downlink signals to a plurality of user terminals are subjected to orthogonal multiplexing by at least one of the frequency domain (f), time domain (f) and code domain. On the other hand, in NOMA, as shown in FIG. 1B, downlink signals to a plurality of user terminals are superposed on the same radio resources (at least one of frequency, time and code), and are non-orthogonally multiplexed (power-multiplexed) in the power domain.

FIG. 1C illustrates the case where a radio base station (eNB: eNodeB) transmits downlink signals to a plurality of user terminals (UE: User Equipment) #1 and #2 using non-orthogonal multiplexing. FIG. 1C illustrates the case where the UE#1 is positioned in a center portion (hereinafter, cell center portion) of a cell formed by the eNB, and the UE#2 is positioned in an edge portion (hereinafter, cell edge portion) of the cell. In addition, a plurality of user terminals (UE#1 and UE#2) non-orthogonally multiplexed into the same radio resources may be called paring terminals.

A path loss of the downlink signal transmitted from the eNB increases, as the distance from the radio base station increases. Therefore, a received SINR (Signal to Interference plus Noise Ratio) of the UE#2 relatively far from the eNB is lower than a received SINR of the UE#1 relatively near the eNB.

In NOMA, by varying transmit power corresponding to channel gain (e.g. received SINR, RSRP (Reference Signal Received Power)), path loss, propagation environment and the like, downlink signals of a plurality of user terminals are non-orthogonally multiplexed into the same (or overlapping) radio resources. For example, in FIG. 1C, downlink signals to the UE#1 and UE#2 are multiplexed into the same radio resources with different transmit power. Relatively low transmit power is allocated to the downlink signal to the UE#1 with a high received SINR, and relatively high transmit power is allocated to the downlink signal to the UE#2 with a low received SINR.

Further, in NOMA, by removing an interference signal from a received signal with an interference canceller, a downlink signal to the terminal is extracted. In this case, among downlink signals non-orthogonally multiplexed into the same radio resources, the interference signal is a downlink signal to another terminal with higher transmit power than that of the terminal. Therefore, by removing the downlink signal to another terminal with higher transmit power than that of the terminal with the interference canceller, the downlink signal to the terminal is extracted.

For example, the downlink signal to the UE#2 is transmitted with higher transmit power than that of the downlink signal to the UE#1. Therefore, the UE#1 positioned in the cell center portion receives the downlink signal to the UE#2 non-orthogonally multiplexed into the same radio resources as the interference signal, in addition to the downlink to the UE#1. The UE#1 removes the downlink signal to the UE#2 with the interference canceller, and is thereby capable of extracting the downlink signal to the UE#1 to properly decode.

On the other hand, the downlink signal to the UE#1 is transmitted with lower transmit power than that of the downlink signal to the UE#2. Therefore, in the UE#2 in the cell edge portion, since the effect of interference by the downlink signal to the UE#1 non-orthogonally multiplexed into the same radio resources is relatively small, the UE#2 is capable of extracting the downlink signal to the UE#2 to properly decode, without performing interference cancellation with the interference canceller.

A combination of levels of transmit power of downlink signals to respective UEs may be called a power set. More specifically, the power set indicates a combination of levels of transmit power of downlink signals to a plurality of user terminals multiplexed into the same and/or overlapping radio resources. The eNB may be configured to be able to select a plurality of power sets.

For example, it is possible to vary combinations of power allocated to the UE#1 and power allocated to the UE#2 in respective power sets, so that the first power set is {UE#1, UE#2}={0.8P, 0.2P}, and that the second power set is {UE#1, UE#2}={0.6P, 0.4P}. Herein, P is total power capable of being allocated.

In addition, candidates for transmit power constituting the power set are not limited thereto. Further, the power set may be represented by a transmit power ratio of signals to respective UEs, or may be represented by values of transmit power of signals to respective UEs. Furthermore, in each power set, it may be configured that power allocated to each UE is one of P (allocation-capable power), 0.8P, 0.6P, 0.4P and 0.2P.

Further, in the following description, it is assumed that "candidates for transmit power" mean candidates for transmit power that the network side (e.g. radio base station) uses in transmission of downlink (downlink signal) to some UE, and do not mean candidates for transmit power that the UE uses in transmission of uplink to the radio base station.

In addition, when P is set as downlink transmit power to some UE, a downlink signal of the UE may be transmitted using Orthogonal Multiple Access (OMA), without using NOMA. In the case of using OMA, the signal may be transmitted using single user MIMO (Multi Input Multi Output).

Herein, as the interference canceller used in the UE#1 in the cell center portion, for example, considered are CWIC (Code Word level Interference Canceller) and R-ML (Reduced complexity-Maximum Likelihood detector). The CWIC is a successive interference canceller (SIC: Successive Interference Cancellation) type, and is also called turbo SIC and the like.

In the case of using the CWIC, the UE#1 performs processing up to turbo decoding on the downlink signal (interference signal) to the UE#2. The UE#1 generates a replica signal of interference based on the turbo decoding result and channel estimation result, subtracts the generated replica signal from the received signal, and extracts the downlink signal to the UE#1. On the other hand, in the case of using the R-ML, the UE#1 does not perform turbo decoding on the downlink signal (interference signal) to the UE#2, and performs maximum likelihood detection concurrently on downlink signals to both of the UEs#1 and #2.

Further, the CWIC is applicable to the case of multiplying the downlink signals to the UEs#1 and #2 by respective different precoding matrixes (PMs). On the other hand, in the R-ML, in the case of applying respective different precoding matrixes to the downlink signals of the UEs#1 and #2, since spatial versatility in the user terminal lacks, there is a case that characteristics deteriorate. In addition, the precoding matrix may be called a precoding weight, precoding vector, precoder and the like.

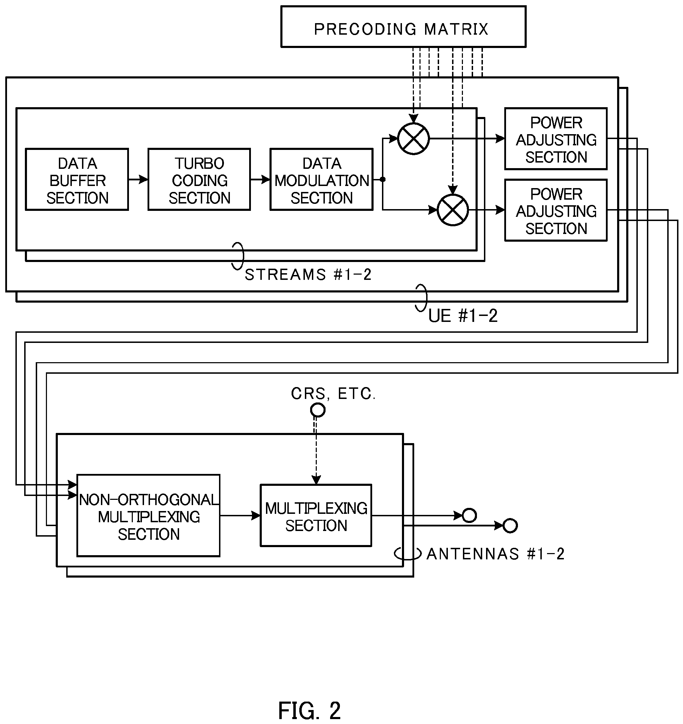

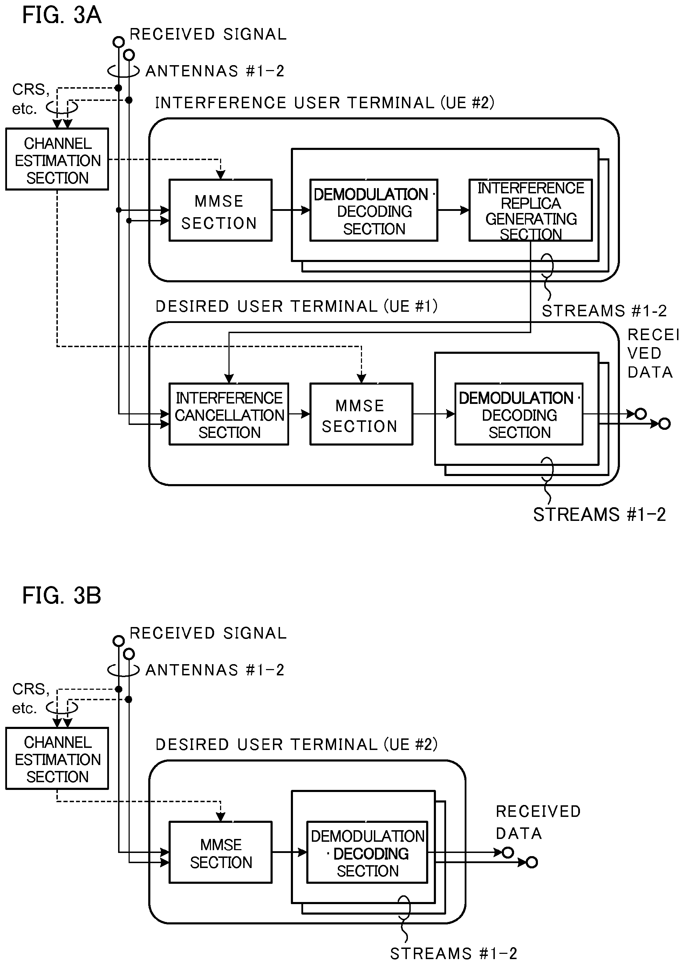

Referring to FIGs. 2 and 3, described is one example of configurations of the eNB and UEs#1 and #2 shown in FIG. 1C. This example shows an example where the user terminal performs channel estimation using a Cell-specific Reference Signal (CRS), and the user terminal may perform channel estimation based on another signal.

FIG. 2 is a diagram showing one example of the configuration of the radio base station (transmitter). In addition, FIG. 2 illustrates the configuration of 2x2 MIMO (Multiple-Input Multiple-Output), but the invention is not limited thereto. For example, the configuration of the radio base station (transmitter) may be a configuration of 4x4 MIMO, or a configuration other than MIMO. Further, FIG. 2 describes the configuration of the radio base station according to transmission processing, and the radio base station is assumed to be provided with necessary configurations as well as the configuration.

As shown in FIG. 2, for each of the UEs#1 and #2, the radio base station performs coding (turbo coding) on data to streams #1 and #2 (Layers #1 and #2), modulates, and subsequently, multiplies by precoding matrixes. Then, the radio base station performs non-orthogonal multiplexing on modulated signals to the UEs#1 and #2 subsequent to power adjustment to multiplex with a control signal, CRS and the like. The station transmits the multiplexed signal as the downlink signal via a plurality of antennas #1 and #2.

FIG. 3 contains diagrams showing one example of configurations of user terminals (receivers) in NOMA. The user terminals of FIG. 3 receive the downlink signals from the radio base station shown in FIG. 2. FIG. 3A shows one example of the configuration of the UE#1 in the cell center portion which performs interference cancellation, and FIG. 3B shows one example of the configuration of the UE#2 in the cell edge portion which does not perform cell cancellation. In addition, each of FIGs. 3A and 3B illustrates the configuration of the UE according to reception processing, and the UE is assumed to be provided with necessary configurations as well as the configuration.

Further, FIG. 3A illustrates the configuration using the SIC type interference canceller such as the CWIC, but the invention is not limited thereto, and a configuration using the R-ML as the interference canceller may be adopted. As shown in FIG. 3A, into the received signal in the UE#1 for performing interference cancellation are non-orthogonally multiplexed the downlink signal to the UE#1 (desired UE) and the downlink signal to the other UE#2 (interference UE).

The UE#1 estimates the downlink signal to the UE#2 to remove, and thereby extracts the downlink signal to the UE#1. Specifically, as shown in FIG. 3A, in a channel estimation section, the UE#1 performs channel estimation using the CRS multiplexed into the received signal. Then, in an MMSE (Minimum Mean Square Error) section, the UE#1 obtains the downlink signal to the UE#2 by a least square method, based on the result (channel matrix) of channel estimation and the received signal. Further, the UE#1 performs demodulation and decoding (turbo decoding) on the downlink signal to the UE#2 to generate a replica signal (interference replica).

Using the replica signal of the UE#2, the UE#1 obtains the downlink signal to the terminal (UE#1). Specifically, the UE#1 subtracts the replica signal of the UE#2 from the received signal in an interference cancellation section to output to the MMSE section. Then, in the MMSE section, the UE#1 estimates the downlink signal of the UE#1 by the least square method, based on the above-mentioned result (channel matrix) of channel estimation and an output signal from the interference cancellation section. By demodulating and decoding the estimated signal, the UE#1 acquires data (received data) toward the UE#1.

On the other hand, as shown in FIG. 3B, the UE#2 in the cell edge portion obtains the downlink signal to the terminal (UE#2), without performing interference cancellation. Specifically, in a channel estimation section, the UE#2 performs channel estimation using the CRS multiplexed into the received signal. Then, in an MMSE section, the UE#2 estimates the downlink signal to the UE#2 by the least square method, based on the result (channel matrix) of channel estimation and the received signal. The UE#2 demodulates and decodes the estimated modulated signal, and thereby acquires data (received data) of the UE#2.

In addition, FIGs. 3A and 3B illustrate the configurations of the UEs respectively in the cell center portion and the cell edge portion in a functional manner, and the configuration of the UE is not limited thereto. For example, a single UE is capable of being provided with both configurations shown in FIGs. 3A and 3B. Further, interference cancellation is not limited to the cell center portion, and may be performed in the cell edge portion.

As described above, in the case of performing non-orthogonal multiplexing on downlink signals to a plurality of UEs to transmit, it is expected that the radio base station controls the precoding matrix and Modulation and Coding Scheme (MCS) applied to each downlink signal, based on feedback information from each UE. Such control based on feedback from the user terminal is also called closed loop control.

In closed loop control, the UE transmits Channel State Information (CSI) to the radio base station as feedback. The CSI includes information on at least one of Precoding Matrix Indicator (PMI) to identify the precoding matrix, Rank Indicator (RI) to identify the rank (the number of layers), and Channel Quality Indicator (CQI) to identify the channel quality.

Specifically, the UE transmits a PMI indicative of an optimal precoding matrix, RI indicative of an optimal rank in the case of assuming the PMI, and CQI indicative of the channel quality in assuming the PMI and RI as feedback. In addition, each UE may select the PMI indicative of the optimal precoding matrix, from a codebook that associates the PMI and precoding matrix with each other. Further, the optimal PMI may be determined based on the propagation environment and the like.

Using the MCS associated with the CQI transmitted as feedback, the radio base station performs modulation · coding on a downlink signal to each UE. Further, the radio base station multiplies the downlink signal to each UE by the precoding matrix indicated by the PMI transmitted as feedback. Furthermore, the radio base station transmits the downlink signal to each UE by the rank (the number of layers) indicated by the RI transmitted as feedback.

Now, in the conventional radio communication system, in derivation of the CSI, the assumption is made that the downlink signal to the terminal is transmitted with maximum transmit power. However, in the case of using MUST, particularly, NOMA, the downlink signal to the UE is not always transmitted with maximum transmit power. Further, there is a case where allocated power is changed by application of NOMA, and proper rank and PMI are also changed.

Therefore, when the eNB performs scheduling using parameters (PMI, etc.) included in the CSI from a UE without modification, there is the risk that the eNB performs improper precoding, modulation and the like on transmit power actually applied to the UE. As a result, there is a problem that it is not possible to efficiently obtain gain of NOMA.

Further, being dependent on a scheduler, there is a case of forcibly making precoders of paring terminals the same corresponding to a combination of users. At this point, the eNB applies a precoder that is different from a precoder indicated by the CSI reported from the UB to the eNB, and therefore, there is the risk that the UE is not capable of performing reception processing suitably.

Therefore, in the case of controlling a combination (power set) of transmit power to downlink signals to a plurality of user terminals such as NOMA, the inventors of the present invention conceived that the user terminal calculates the CSI by assuming a plurality of candidates for transmit power. Specifically, the inventors of the invention found out that the user terminal identifies a plurality of pieces of CSI to report based on predetermined information (e.g. information notified from the radio base station) to perform feedback at proper timing.

According to one Embodiment of the present invention, since it is possible to determine transmit power to apply to a downlink signal based on a CQI and the like measured by a user terminal, and based on the transmit power, further determine other parameters (PMI, RI and the like), the user terminal is capable of taking the initiative in determining parameters according to the downlink signal.

One Embodiment of the present invention will be described below in detail. In this Embodiment, as one example, it is assumed that a user terminal receives a downlink signal using the NOMA scheme, but the invention is not limited thereto. As long as the downlink signal received in the user terminal is a downlink signal multiplexed (power-multiplexed) into the same radio resource as that of a downlink signal to another user terminal, the downlink signal may be any signal. For example, the present invention is applicable to downlink signals using other schemes specified as MUST.

Further, in the following description, it is assumed that the downlink signal using the NOMA scheme is a signal such that an OFDMA signal is subjected to non-orthogonal multiplexing in the power domain, but the invention is not limited thereto. The downlink signal subjected to non-orthogonal multiplexing by the NOMA scheme is not limited to the OFDMA signal, and may be any signal multiplexed in at least one of the frequency domain (f), time domain (t) and code domain.

Furthermore, in the following description, transmission modes (TMs) (e.g. transmission modes 2-6) are assumed where data demodulation is performed using the CRS, but the invention is not limited thereto. This Embodiment is applicable to transmission modes (e.g. transmission modes 7-9) where data demodulation is performed using a demodulation reference signal (DMRS: DeModulation Reference Signal), and a transmission mode (e.g. transmission mode 10) where a downlink signal is received from a plurality of radio base stations (cells) using Coordinated Multipoint (CoMP).

Still furthermore, in the following description, it is assumed that interference measurement (also referred to as measurement of channel state, propagation environment or the like) in the user terminal is performed based on the CRS, but the invention is not limited thereto. Interference measurement may be performed based on a Channel State Information-Reference Signal (CSI-RS), or may be performed based on another signal. In addition, in the case of using the CRS, as compared with the case of using the CSI-RS such as the transmission mode 10, there is the advantage in the respect that it is not necessary to beforehand notify of information (CSI-RS/CSI-IM (interference measurement)) indicative of resources to measure by higher layer signaling.

Moreover, in this Embodiment, from the viewpoint of reducing the reception processing load, it is suitable to use the R-ML as the interference canceller, but the invention is not limited thereto, and it is also possible to apply the SIC type interference canceller such as the CWIC. Further, in this Embodiment, it is assumed that the number of a plurality of user terminals (paring terminals) non-orthogonally multiplexed into the same radio resources is "2", but the invention is not limited thereto, and three or more user terminals may be grouped to non-orthogonally multiplex into the same radio resources.

### (Radio communication method)

In radio communication methods according to this Embodiment, the user terminal calculates pieces of CSI (PMI, CQI, RI) respectively on a plurality of candidates for downlink transmit power to transmit to the eNB as feedback.

A plurality of candidates for transmit power as feedback targets may be determined by the user terminal, may be notified to the user terminal, or may be beforehand set on the user terminal. For example, the user terminal may be configured to calculate the CSI on all of set candidates for transmit power (e.g. notified by higher layer signaling) to perform feedback.

Herein, the user terminal may be configured to limit (restrict) the feedback targets based on predetermined information. For example, the user terminal may compare the quality (e.g. RSRP, RSRQ, CQI) of a received signal acquired from a measurement result with a predetermined threshold notified from the radio base station, and thereby narrow power candidates which are a search range (or, are CSI feedback targets). In other words, the radio base station notifies user terminals of a predetermined threshold, and is thereby capable of grouping user terminals for each configuration of available candidates for transmit power, and of reducing the information amount of feedback transmitted from the user terminals.

It is assumed that user terminals belonging to some group (which may be called a search range group, user group and the like) are user terminals such that the measured CQI is included in values of a predetermined range, but the invention is not limited thereto, and groups may be defined by another indicator. For example, instead of the CQI and/or as well as the CQI, the user terminal may use channel gain (received SINR, RSRP (Reference Signal Received Power), RSRQ (Reference Signal Received Quality), etc.), path loss, propagation environment and the like to determine a group.

Further, instead of the CQI, channel gain and the like/or as well as the CQI, channel gain and the like, based on a position (e.g. relative position from the connected radio base station) of the terminal, the terminal may determine a group to which the terminal belongs, and limit candidates for transmit power in the search range. For example, the user terminal may determine the position of the terminal and the position of the radio base station, using geographic position information acquired from the GPS (Global Positioning System), gyroscopic sensor, compass, laser range scanner (laser scan sensor), radio beam (radar), thermography and the like, and image information acquired from a camera.

Herein, the numbers of thresholds and ranges targeted for comparison may be "1" or may be multiple. Further, the number of power candidates (candidates for transmit power searched in a predetermined group) included in the predetermined group may be "1" or may be multiple.

Further, for example, information on the threshold and/or information on the group (e.g. information on candidates for transmit power which the UE belonging to some group searches for) may be notified to the user terminal, by higher layer signaling (e.g. RRC signaling, MAC signaling, broadcast information), downlink control signal (DCI: Downlink Control Information) or combination thereof. In addition, these pieces of information may be beforehand set on the user terminal.

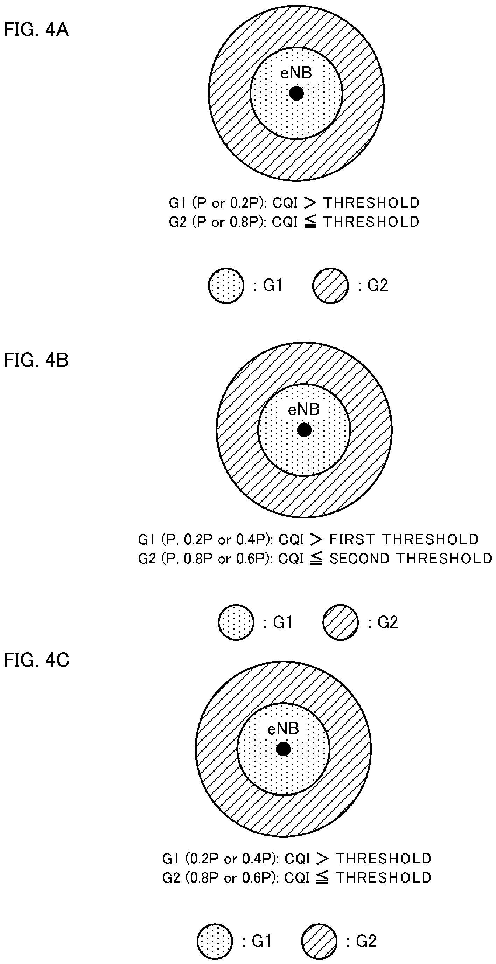

FIG. 4 contains diagrams showing one example of limiting candidates for transmit power that are a search range in this Embodiment. Herein, as candidates for transmit power, P, 0.8P, 0.6P, 0.4P, and 0.2P are assumed, but the candidates are not limited thereto. Further, the CQI to compare is assumed to be a CQI in the case of assuming applying OMA to a downlink signal (or the case of assuming P as transmit power), but is not limited thereto. For example, among a plurality of set power candidates, a CQI in the case of assuming maximum downlink transmit power except P may be a comparison target.

FIG. 4A is a diagram showing one example of switching between two search range groups corresponding to whether or not a CQI is larger than a predetermined threshold. A group G1 is a group used in the case where the CQI is larger than the predetermined threshold, and the search range is P and 0.2P. A UE belonging to the G1 is provided with P and 0.2P as candidates for transmit power, and calculates the CSI for each of the candidates for transmit power to perform feedback.

On the other hand, a group G2 is a group used in the case where a CQI is the predetermined threshold or less, and the search range is P and 0.8P. A UE belonging to the G2 is provided with P and 0.8P as candidates for transmit power, and calculates the CSI for each of the candidates for transmit power to perform feedback.

FIG. 4B is a diagram showing one example of switching between two search range groups by comparing a CQI with two thresholds (first threshold, second threshold). A group G1 is a group used in the case where the CQI is larger than the first threshold, and the search range is P, 0.2P and 0.4P. A UE belonging to the G1 is provided with P, 0.2P and 0.4P as candidates for transmit power, and calculates the CSI for each of the candidates for transmit power to perform feedback.

On the other hand, a group G2 is a group used in the case where the CQI is the second threshold or less, and the search range is P, 0.8P and 0.6P. A UE belonging to the G2 is provided with P, 0.8P and 0.6P as candidates for transmit power, and calculates the CSI for each of the candidates for transmit power to perform feedback.

In addition, in FIG. 4B, the CSI subjected to calculation and/or feedback may be CSI on all of three candidates for power, or CSI on a part of three candidates for power. Further, the second threshold may a value different from the first threshold, or may be the same value as the first threshold. For example, by notifying of the same/different value as/from the first threshold as the second threshold, the group configurations in FIGs. 4A and 4B may be switched.

FIG. 4C is a diagram showing another example of switching between two search range groups corresponding to whether or not a CQI is larger than a predetermined threshold. In FIG. 4C, as compared with the example of FIG. 4A, candidates for power in each group are different. Specifically, it is configured that each candidate for power does not include P.

In this case, by notifying the user terminal of information on a multiplexing scheme applied to a downlink signal, the user terminal may be configured to switch between candidates for power included in the group to use. For example, as the information on the multiplexing scheme, the user terminal may be notified that OMA or NOMA is applied to the downlink signal by 1 bit to switch between the group configurations of FIGs. 4A and 4C. The information on the multiplexing scheme may be notified to the user terminal by higher layer signaling, DCI and the like.

In addition, in FIG. 4, based on the position of the user terminal (e.g. determined by the received quality (CQI, RSRP, path loss value and the like)), the user terminal may determine whether the terminal belongs to the G1 or G2. For example, in the case where the user terminal is positioned in the cell center portion (e.g. the received quality is a predetermined value or more), the user terminal is capable of determining that the terminal belongs to the G1. In the case where the user terminal is positioned in the cell edge portion (e.g. the received quality is a predetermined value or less), the user terminal is capable of determining that the terminal belongs to the G2. In this case, as information on the group, the radio base station may notify the user terminal of information on a correspondence relationship between a predetermined group and a position of a terminal (e.g. whether the received quality is a predetermined threshold or less), by higher layer signaling, DCI and the like.

Further, on each candidate for power, the user terminal may transmit the best CSI as feedback, or may transmit a plurality of pieces of CSI as feedback. For example, as a plurality of pieces of CSI, the user terminal may notify of the best CSI and second best CSI. In addition, for example, the best CSI and second best CSI are determined by a propagation environment of the user terminal. Further, the invention is not limited thereto, and as a plurality of pieces of CSI, the terminal may notify of from the best CSI to nth (n≥2) CSI. Herein, information indicative of the above-mentioned n and CSI (e.g. xth best CSI) to notify may be notified to the user terminal by higher layer signaling, DCI and the like.

Furthermore, among candidates for transmit power, the user terminal may explicitly report candidates for transmit power on which CSI is transmitted as feedback to the radio base station. In this case, for example, the terminal may transmit the CSI as feedback, while further transmitting information on a candidate for transmit power that corresponds to the CSI.

Information to transmit as the CSI will be described below. In the following description, generation rules of PMI, CQI and RI on a predetermined candidate for transmit power will be described, and the CSI may be generated on a plurality of candidates for transmit power according to the same rule, or may be generated according to another rule.

A plurality of PMIs to transmit as feedback on a predetermined candidate for transmit power may be indicated by higher layer signaling. In this case, the radio base station may indicate a plurality of PMIs to the user terminal using a bitmap. This bitmap may be a bitmap (also called codeBookSubsetRestriction) equal to the number of PMIs defined in the codebook, and "1" may be set on a bit indicative of a PMI which the terminal is instructed to transmit. The user terminal is capable of transmitting the PMI indicated by the bitmap to the radio base station.

Further, the user terminal may transmit a plurality of CQIs that respectively corresponds to the above-mentioned plurality of PMIs, in addition to the above-mentioned plurality of PMIs. As a matter of course, the plurality of CQIs may be a CQI that corresponds to the best PMI and a CQI that corresponds to the second best PMI, or may be CQIs that respectively correspond to PMIs of from the best to an nth (n≥2) best. In this case, n may be indicated by higher layer signaling. Further, the plurality of CQIs may be CQIs that correspond to PMIs indicated by higher layer signaling.

Furthermore, in addition to the above-mentioned plurality of PMIs, the user terminal may transmit a plurality of RIs that respectively corresponds to the above-mentioned plurality of PMIs, or may transmit a single RI common to the above-mentioned plurality of PMIs. Without transmitting the plurality of RIs, the user terminal may transmit only the above-mentioned plurality of PMIs, or may transmit only the above-mentioned plurality of PMIs and the above-mentioned plurality of CQIs. This is because it is expected that feedback of the RI is indicated to be generally a longer cycle than that of feedback of the PMI by higher layer signaling, and the common value is available within the cycle, without transmitting the RI.

In addition, calculation and feedback of the CSI may be performed on a wideband-by-wideband basis, or may be performed on a subband-by-subband basis. Further, the information subjected to feedback may undergo joint encoding. For example, the CSI (PMI, CQI, RI and the like) on a single candidate for transmit power may be subjected to joint encoding, or the CSI on a plurality of candidates for transmit power may be subjected to joint encoding. Further, joint encoding may be performed on a subband-by-subband basis, or may be performed collectively in all subbands (in a wideband).

On the other hand, based on the CSI on a plurality of candidates for transmit power reported from a UE, the eNB determines at least one parameter of transmit power, rank (RI) and PMI to apply to a downlink signal to the UE to notify the UE.

According to a predetermined rule, the eNB determines parameters to apply to paring terminals. These parameters are preferably determined by a principle aiming to maximize user throughput, and for example, may be determined so as to maximize scheduling metric. Herein, the eNB may control so as not to use, in the downlink signal, transmit power except candidates for transmit power that each UE uses in the feedback report.

Further, in receiving CSI from each of a plurality of UEs to be paired, the eNB may determine the parameter based on the CSI from each UE, or may determine the parameter based on the CSI from one of the UEs.

It is suitable that the eNB applies one of the candidates for transmit power that correspond to the CSI received from the UE, and the eNB may control to apply a candidate for transmit power (transmit power that is not used in the feedback report) except the candidates to the UE. For example, in the case where there is the advantage that performance is improved in consideration of the entire system, such control may be performed.

In addition, as the information to notify the UE, the eNB may include parameters (power set, candidate for power, RI, PMI and the like) to apply to a downlink signal to the other UE (the other paring terminal).

Further, instead of notifying of the parameter, by notifying of other information, the user terminal may be configured to determine a power set, RI, PMI and the like applied to the downlink signal based on the information. For example, by notifying of information on the multiplexing scheme (e.g. OMA or NOMA) applied to the downlink signal, the user terminal may determine whether or not the parameter reported from the user terminal is applied to the downlink signal.

Furthermore, the user terminal is not notified of any information, and may thereby determine whether or not the parameter reported from the user terminal is applied to the downlink signal. For example, when any information is not notified, the user terminal may determine that the parameter transmitted as feedback is applied to the downlink signal, and perform reception processing, measurement processing and the like, using the parameter.

Still furthermore, based on power of the received DMRS, the user terminal may determine a power set applied to the user terminal and/or another user terminal to be a multiplexed pair. Moreover, in the case of using CRS-based MIMO, the radio base station may notify the user terminal of information on a power set applied to the downlink signal to the user terminal and/or another user terminal to be a multiplexed pair, by higher layer signaling, DCI and the like.

According to this Embodiment, based on a measurement result of the CQI and the like, the UE is capable of taking the initiative in determining parameters of downlink transmit power, PMI and the like in consideration of application of NOMA, and of transmitting proper CSI to the radio base station as feedback. By this means, the radio base station is capable of calculating transmission parameters (PMI and the like) in the case of different levels of transmit power, using the CSI on each of a plurality of candidates for power notified from the UE, and of performing suitable control (user paring, scheduling and the like), and it is thereby possible to suppress reduction in the effect of improving system level performance by NOMA.

### (Feedback Aspects of CSI)

Next, described in detail are transmission aspects of CSI on a plurality of candidates for downlink transmit power in the radio communication method according to this Embodiment. The CSI on a plurality of candidates for transmit power transmitted in the following Aspects may be a plurality of PMIs, may be a plurality of PMIs and a plurality of CQIs, or may be a plurality of PMIs, a plurality of CQIs and a plurality of/single RI, and these indicators are assumed to be collectively called.

### <Aspect 1>

In Aspect 1, the user terminal transmits CSI on a plurality of candidates for transmit power, using a periodic CSI report to report the CSI at predetermined intervals. The user terminal may transmit the CSI on a plurality of candidates for transmit power collectively in a single subframe as feedback, or may separate to a plurality of subframes as feedback. For example, the user terminal may transmit the CSI on a plurality of candidates for transmit power in different subframes for each candidate for transmit power as feedback.

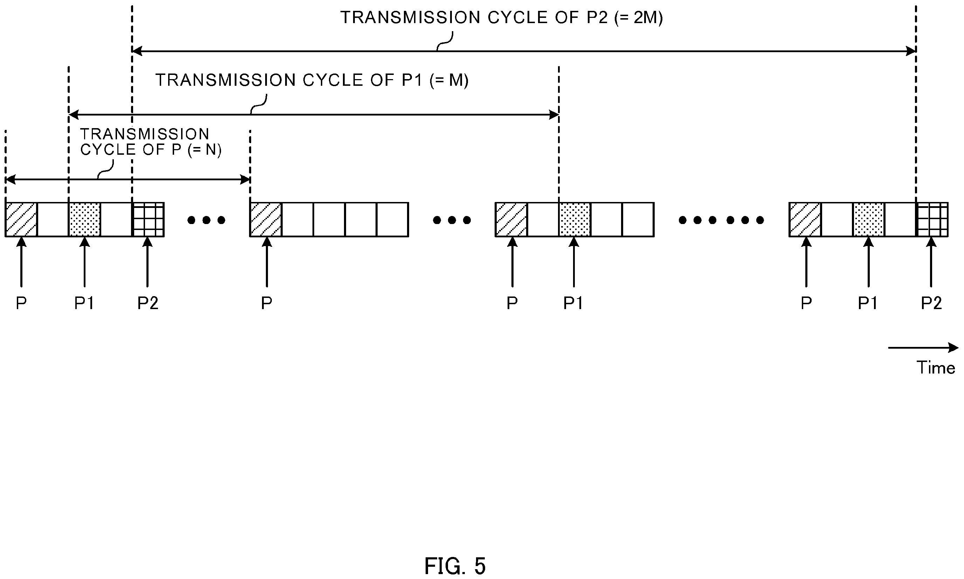

FIG. 5 is a diagram showing one example of transmission of CSI on a plurality of candidates for transmit power according to Aspect 1. FIG. 5 illustrates the example where the user terminal transmits the CSI on three candidates (P, P1, P2) for power in different subframes, but the invention is not limited thereto. Herein, it is assumed that P, P1 and P2 respectively represent a candidate for transmit power based on the premise of OMA, a candidate for transmit power based on the premise of a user in the cell center portion in NOMA, and a candidate for transmit power based on the premise of a user in the cell edge portion in NOMA, but are not limited thereto.

As shown in FIG. 5, the user terminal allocates the CSI on a plurality of candidates for transmit power to an uplink control channel (PUCCH: Physical Uplink Control Channel) in respective different subframes to transmit. In addition, it is possible to use PUCCH format 2/2A/2B and the like in transmission of the CSI. Further, when an uplink shared channel (PUSCH: Physical Uplink Shared Channel) is allocated to a transmission subframe of each CSI, the CSI may be transmitted using the PUSCH.

Transmission cycles of the CSI may be different for each candidate for transmit power. FIG. 5 illustrates the example where the feedback cycle of the CSI on P is N, the feedback cycle of the CSI on P1 is M (M>N), and the feedback cycle of the CSI on P2 is 2M. In addition, each feedback cycle may be different or may be the same.

Information (e.g. cycle, subframe index, subframe offset and the like) on timing to transmit the CSI on each candidate for transmit power as feedback may be notified to the user terminal, by higher layer signaling, DCI and the like, or may be beforehand set. For example, the transmission subframe of each CSI may be identified by a transmission cycle and offset with respect to the beginning of a radio frame notified to the user terminal from the radio base station by higher layer signaling.

### <Aspect 2>

In Aspect 2, the user terminal transmits CSI on a plurality of candidates for transmit power indicated by higher layer signaling (e.g. RRC signaling) from the radio base station. For example, when a plurality of candidates for transmit power indicated as report targets are P, P1, P2, and thus three, the user terminal transmits the CSI on each of the candidates P, P1 and P2 for transmit power to the radio base station as feedback.

As described above, for each candidate for transmit power, the radio base station may indicate a plurality of PMIs using a bitmap. This bitmap may be a bitmap (also called codeBookSubsetRestriction) equal to the number of PMIs defined in the codebook. The user terminal transmits a PMI indicated by the bitmap to the radio base station. Further, in addition to the PMI, the user terminal may transmit at least one of a CQI that corresponds to the PMI and an RI that corresponds to the PMI.

In addition, for a predetermined candidate for transmit power, the radio base station is capable of indicating transmission of a single PMI. Further, it is possible to combine Aspect 2 with Aspect 1, and the user terminal may transmit the CSI on a plurality of candidates for transmit power indicated from the radio base station in respective different subframes periodically. Further, the information to identify a plurality of candidates for transmit power as CSI report targets is not limited to higher layer signaling, and may be notified by another method (e.g. DCI and the like).

### <Aspect 3>

In Aspect 3, the user terminal transmits CSI on a plurality of candidates for transmit power with an aperiodic CSI report. In the aperiodic CSI report, the user terminal receives downlink control information (DCI) including a CSI request field via the PDCCH. When a value of the CSI request field indicates a transmission instruction (e.g. the value is "1"), the user terminal transmits the CSI on a plurality of candidates for transmit power (or at least a part of the CSI on a plurality of candidates for transmit power), using the PUSCH assigned by the DCI.

In addition, when the value of the above-mentioned CSI request filed indicates the transmission instruction, as the CSI on a plurality of candidates for transmit power, the user terminal may transmit a plurality of PMIs, or may transmit a plurality of CQIs, or a plurality of CQIs and a plurality of/single RI, in addition to the plurality of PMIs.

Further, it is possible to combine Aspect 3 with Aspect 2, and when the value of the above-mentioned CSI request field indicates the transmission instruction, the user terminal may transmit CSI on a plurality of candidates for transmit power indicated by the higher layer signaling.

In addition, in Aspect 3, since it is essential only to indicate whether or not to transmit the CSI by the above-mentioned CSI request field, the above-mentioned CSI request filed may be 1 bit. However, the invention is not limited thereto, and the above-mentioned CSI request field may be 2 bits, or may be 3 bits or more.

### <Aspect 4>

In Aspect 4, the user terminal dynamically controls the CSI transmitted by the aperiodic CSI report described above. Specifically, the user terminal receives information (instruction information) on a correspondence relationship between a value of the CSI request field and a candidate for transmit power of the CSI to report, by higher layer signaling.

The user terminal receives the DCI including the CSI request field on the PDCCH, and using the PUSCH indicated by the DCI, transmits the CSI (at least a part of the CSI on a plurality of candidates for transmit power) determined based on the value of the CSI request field and the above-mentioned correspondence relationship. In addition, the above-mentioned correspondence relationship may be called a table (trigger table) used in a trigger of the aperiodic CSI report.

In addition, the user terminal may transmit the CSI that corresponds to a candidate for indicated transmit power using the CSI request field as a trigger once at predetermined timing (e.g. after four subframes) as feedback, or may transmit over a predetermined period as feedback. Further, when the user terminal receives the DCI including the CSI request field, the user terminal may transmit the CSI that corresponds to the candidate for indicated transmit power as feedback for a period until predetermined reset information is notified. Herein, in the case of performing feedback a plurality of times, either periodic or aperiodic feedback may be performed, and information (cycle, transmission timing and the like) on the feedback method may be notified by higher layer signaling, DCI and the like.

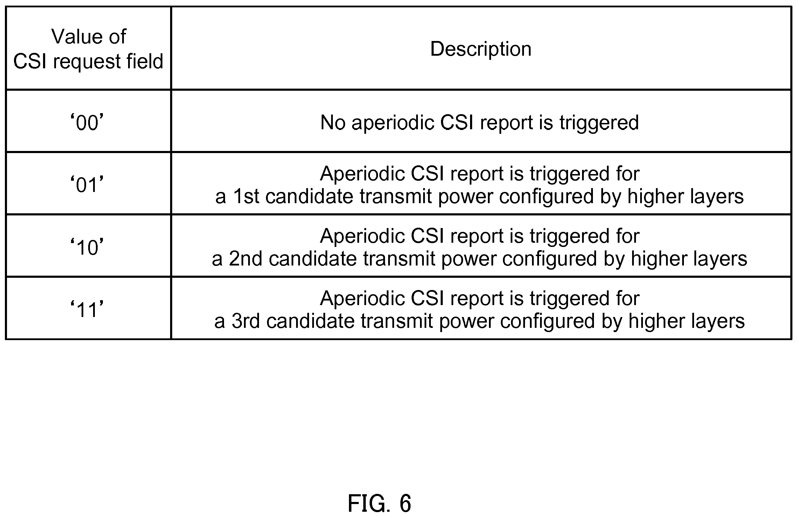

FIG. 6 is a diagram showing one example of CSI request fields according to Aspect 4. For example, in FIG. 6, when the value of the CSI request field is "00", the terminal is instructed not to transmit the CSI. When the value is "01", "10" or "11", the terminal is instructed to transmit a first candidate for transmit power (first candidate), a second candidate for transmit power (second candidate), or a third candidate for transmit power (third candidate) notified by higher layer signaling, respectively.

In addition, in the example of FIG. 6, it is illustrated that the user terminal reports the CSI on a single candidate for transmit power, corresponding to the value of the CSI request field, but the invention is not limited thereto. For example, transmission of a plurality of candidates for transmit power may be indicated corresponding to the value of the CSI request field. Further, as the instruction information, bitmaps such as codeBookSubsetRestriction may be used. In the bitmap, "1" may be set on a bit indicative of CSI (PMI) which the terminal is instructed to transmit.

In Aspect 4, by varying the value of the CSI request field, it is possible to dynamically control the CSI transmitted from the user terminal. Further, the user terminal is capable of ordinarily transmitting the CSI on a single candidate for transmit power notified (or currently set) from the eNB as feedback, while being capable of transmitting the CSI on a plurality of candidates for transmit power as feedback according to a trigger. By this means, it is possible to transmit required information as feedback, while suppressing increase in communication overhead.

In addition, in FIG. 6, as the instruction information, the information on a predetermined candidate for transmit power that corresponds to a value of the CSI request field is transmitted by higher layer signaling, but the invention is not limited thereto. It may be fixedly determined that the terminal is instructed to transmit CSI on which candidate for transmit power by the value of the CSI request field. For example, in FIG. 6, it may be configured that the user terminal is instructed to transmit the CSI of a candidate P for transmit power by the value "01" of the CSI request field, transmit the CSI of a candidate P1 for transmit power by the value "10, and transmit the CSI of a candidate P2 for transmit power by the value "11".

Further, by higher layer signaling (e.g. RRC signaling), DCI and the like, the terminal may be notified of information on that the aperiodic CSI report is performed using either the existing trigger table, or the trigger table related to candidates for transmit power as shown in FIG. 6. Based on the information, the user terminal is capable of switching the trigger table used in the aperiodic CSI report.

Furthermore, the above-mentioned example shows the case where the CSI request field is included in the DCI, and the CSI configuration is dynamically controlled, but the invention is not limited thereto. For example, it may be configured that the CSI request field is notified by higher layer signaling (RRC signaling, etc.), and that the CSI configuration is controlled in a semi-static manner.

### (Radio communication system)

A configuration of a radio communication system according to one Embodiment of the present invention will be described below. In the radio communication system, the radio communication methods according to the invention are applied. In addition, the radio communication methods of the above-mentioned Embodiment may be applied alone, or may be applied in combination thereof. In addition, the same component is assigned with the same reference numeral to omit redundant descriptions.

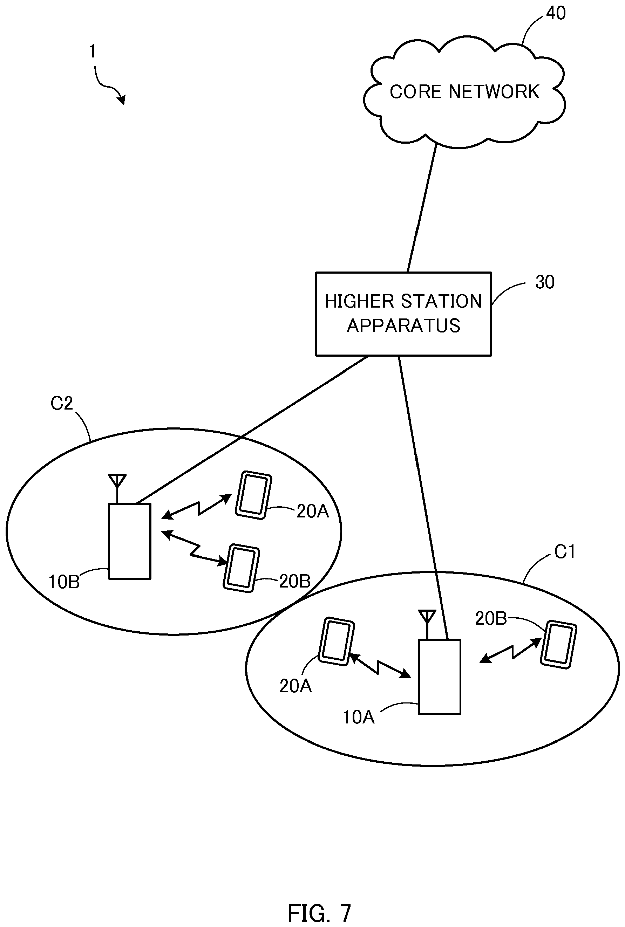

FIG. 7 is a diagram showing one example of a schematic configuration of the radio communication system according to one Embodiment of the present invention. In addition, the radio communication system 1 may be called SUPER 3G, LTE-A (LTE-Advanced), IMT-Advanced, 4G, 5G, FRA (Future Radio Access) and the like.

The radio communication system 1 shown in FIG. 7 includes radio base stations 10 (10A, 10B), and a plurality of user terminals 20 (20A, 20B) that communicate with the radio base station 10. The radio base stations 10 are connected to a higher station apparatus 30, and are connected to a core network 40 via the higher station apparatus 30.

The radio base station 10 may be a macro base station, collection node, eNodeB (eNB), transmission/reception point and the like for forming a macro cell, or may be a small base station, micro-base station, pico-base station, femto-base station, Home eNodeB (HeNB), RRH (Remote Radio Head), transmission/reception point and the like for forming a small cell. Further, the radio base stations 10 may be subjected to wired connection (optical fiber, X2 interface and the like) or wireless connection.

Each user terminal 20 is capable of communicating with the radio base stations 10 in cells C1, C2, respectively. Each user terminal 20 is a terminal supporting various communication schemes such as LTE and LTE-A, and may include a fixed communication terminal, as well as the mobile communication terminal.

In addition, for example, the higher station apparatus 30 includes an access gateway apparatus, Radio Network Controller (RNC), Mobility Management Entity (MME) and the like, but is not limited thereto.

In the radio communication system 1, as radio access schemes, NOMA (Non-Orthogonal Multiple Access) is applied on downlink, and SC-FDMA (Single Carrier Frequency Division Multiple Access) is applied on uplink. Further, OFDMA (Orthogonal Frequency Division Multiple Access) may be applied on downlink.

Further, NOMA and OFDMA may be combined on downlink. In addition, uplink and downlink radio access schemes are not limited to the combination of the schemes. For example, techniques that are techniques (MUST: Multiuser Superposition Transmission) for multiplexing signals to a plurality of user terminals into the same radio resource to transmit and that are techniques other than NOMA may be applied on downlink.

NOMA is a multicarrier transmission scheme for dividing a frequency band into a plurality of narrow frequency bands (subcarriers, sub-bands or the like), and performing non-orthogonal multiplexing on signals of user terminals 20 with different transmit power for each sub-band, and OFDMA is a multicarrier transmission scheme for dividing a frequency band into a plurality of sub-bands, and performing orthogonal multiplexing on signals of user terminals 20 for each sub-band to perform communication. SC-FDMA is a single-carrier transmission scheme for dividing a system bandwidth into bands comprised of a single or contiguous resource blocks for each terminal so that a plurality of user terminals 20 uses mutually different bands, and thereby reducing interference among user terminals. In addition, NOMA and/or OFDMA may be used in a wideband, or may be used for each sub-band.

Described herein are communication channels used in the radio communication system 1. The downlink communication channels include a downlink shared data channel (PDSCH: Physical Downlink Shared Channel) shared by user terminals 20, broadcast channel (PBCH: Physical Broadcast Channel), downlink L1/L2 control channels (PDCCH, EPDCCH, PCFICH, PHICH, etc.) and the like. User data, higher layer control information, SIB (System Information Block) and the like are transmitted on the PDSCH. Further, MIB (Master Information Block) is transmitted on the PBCH.

The downlink control information (DCI) including scheduling information of the PDSCH and PUSCH is transmitted on the PDCCH (Physical Downlink Control Chanel). The EPDCCH is frequency division multiplexed with the PDSCH (downlink shared data channel) to be used in transmitting the DCI and the like as the PDCCH. The number of OFDM symbols used in the PDCCH is transmitted on the PCFICH (Physical Control Format Indicator Channel). A receipt confirmation signal (e.g. ACK/NACK) of HARQ (Hybrid ARQ) for the PUSCH is transmitted on the PHICH (Physical Hybrid-ARQ Indicator Channel).

Further, the uplink communication channels include the uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data and higher layer control information is transmitted on the PUSCH. Further, radio quality information (CQI: Channel Quality Indicator) of downlink, receipt conformation signal and the like are transmitted on the PUCCH. A random access preamble to establish connection with the cell is transmitted on the PRACH.

In the radio communication system 1, transmitted as the downlink reference signal are the Cell-specific Reference Signal (CRS), Channel State Information-Reference Signal (CSI-RS), DeModulation Reference Signal (DMRS) and the like. Further, in the radio communication system 1, transmitted as the uplink reference signal are a Sounding Reference Signal (SRS), DeModulation Reference Signal (DMRS) and the like. In addition, the DMRS may be called a UE-specific Reference Signal. Further, the reference signal to transmit is not limited thereto.

### (Radio base station)

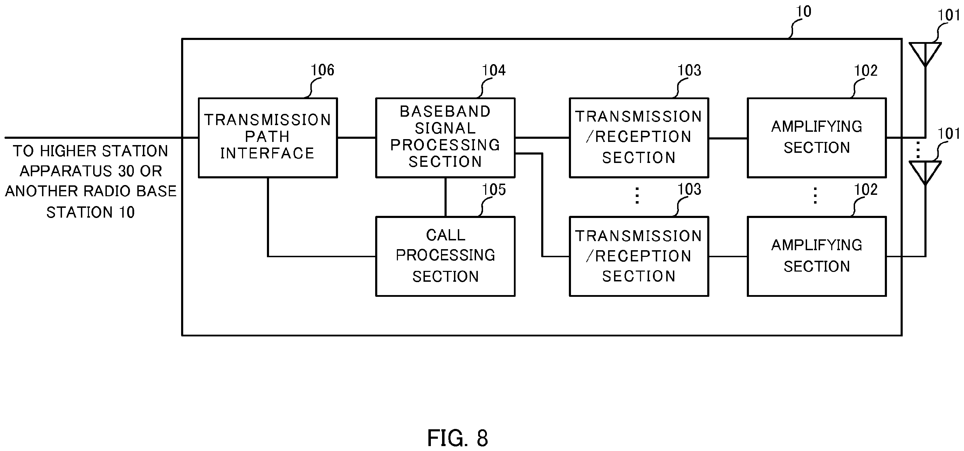

FIG. 8 is a diagram showing one example of an entire configuration of the radio base station according to one Embodiment of the present invention. The radio base station 10 is provided with a plurality of transmission/reception antennas 101, amplifying sections 102, transmission/reception sections 103, baseband signal processing section 104, call processing section 105, and transmission path interface 106. In addition, with respect to each of the transmission/reception antenna 101, amplifying section 102, and transmission/reception section 103, the radio base station is essentially configured to include at least one or more.

User data to transmit to the user terminal 20 from the radio base station 10 on downlink is input to the baseband signal processing section 104 from the higher station apparatus 30 via the transmission path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g. transmission processing of HARQ (Hybrid Automatic Repeat reQuest)), scheduling, transmission format selection, channel coding, Inverse Fast Fourier Transform (IFFT) processing, and precoding processing to transfer to the transmission/reception sections 103. Further, also concerning a downlink control signal, the section 104 performs transmission processing such as channel coding and Inverse Fast Fourier Transform on the signal to transfer to the transmission/reception sections 103.

Each of the transmission/reception sections 103 converts the baseband signal, which is subjected to precoding (multiplied by a precoding matrix) for each antenna and is output from the baseband signal processing section 104, into a signal with a radio frequency band to transmit. The radio-frequency signal subjected to frequency conversion in the transmission/reception section 103 is amplified in the amplifying section 102, and is transmitted from the transmission/reception antenna 101. The transmission/reception section 103 is capable of being comprised of a transmitter/receiver, transmission/reception circuit or transmission/reception apparatus explained based on common recognition in the technical field according to the present invention. In addition, the transmission/reception section 103 may be comprised as an integrated transmission/reception section, or may be comprised of a transmission section and reception section.

On the other hand, for uplink signals, radio-frequency signals received in the transmission/reception antennas 101 are amplified in the amplifying sections 102. The transmission/reception section 103 receives the uplink signal amplified in the amplifying section 102. The transmission/reception section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives signals to/from the higher station apparatus 30 via a predetermined interface. Further, the transmission path interface 106 may transmit and receive signals (backhaul signaling) to/from an adjacent radio base station 10 via an inter-base station interface (e.g. optical fiber in conformity with CPRI (Common Public Radio Interface), X2 interface).

The transmission/reception section 103 receives CSI on a plurality of candidates for transmit power from the user terminal 20. Further, the transmission/reception section 103 may transmit higher layer control information subjected to higher layer signaling to the user terminal 20. The higher layer control information may include the instruction information indicating a plurality of pieces of CSI for the user terminal 20 to transmit. Further, the higher layer control information may include the instruction information indicating that CSI on which candidate for transmit power is required, by the value of the CSI request value. Furthermore, the transmission/reception section 103 may transmit the DCI including the CSI request field on the PDCCH.

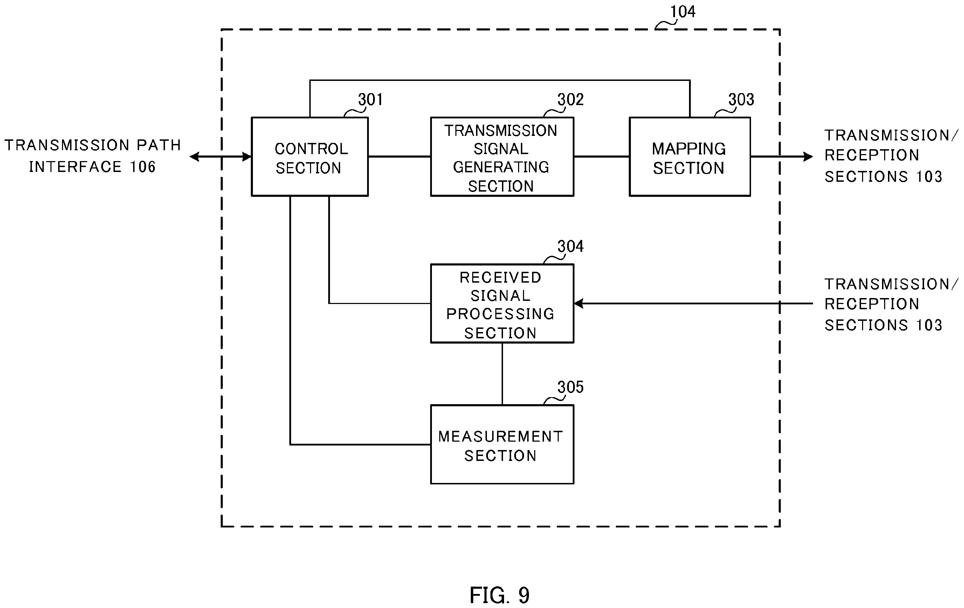

FIG. 9 is a diagram showing one example of a function configuration of the radio base station according to one Embodiment of the present invention. In addition, FIG. 9 mainly illustrates function blocks of a characteristic portion according to one Embodiment of the invention, and the radio base station 10 is assumed to have other function blocks required for radio communication. As shown in FIG. 9, the baseband signal processing section 104 is provided with a control section (scheduler) 301, transmission signal generating section 302, mapping section 303, received signal processing section 304, and measurement section 305.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, and assignment of signals by the mapping section 303. Further, the control section 301 controls reception processing of signals by the received signal processing section 304, and measurement of signals by the measurement section 305.

The control section 301 controls scheduling (e.g. resource allocation) of system information, a downlink data signal transmitted on the PDSCH and downlink control signal transmitted on the PDCCH and/or EPDCCH. Further, the control section 301 controls scheduling of a synchronization signal and downlink reference signals such as the CRS, CSI-RS and DMRS.

Further, the control section 301 controls scheduling of an uplink data signal transmitted on the PUSCH, uplink control signal (e.g. receipt conformation signal (HARQ-ACK)) transmitted on the PUCCH and/or the PUSCH, random access preamble transmitted on the PRACH, uplink reference signal and the like.

Based on the CSI on a plurality of candidates for transmit power transmitted from each user terminal 20 as feedback, the control section 301 determines a plurality of user terminals (paring terminals) of which downlink signals are non-orthogonally multiplexed. Further, based on the CSI on a plurality of candidates for transmit power transmitted from each of a predetermined user terminal 20 and/or another user terminal 20 as feedback, the control section 301 controls transmission processing (precoding, modulation and the like) of a downlink signal to the predetermined user terminal 20.

For example, the control section 301 may determine to perform non-orthogonal multiplexing on a plurality of user terminals that transmits a common PMI on a particular candidate for transmit power. Further, the control section 301 controls the transmission signal generating section 302 so as to multiply each of the downlink signals to the above-mentioned plurality of user terminals (paring terminals) by the same or different precoding matrix. Specifically, the control section 301 may control the transmission signal generating section 302 so as to multiply each of the downlink signals to the above-mentioned paring terminals by a precoding matrix indicated by the PMI common to the paring terminals. Furthermore, the control section 301 may detect the precoding matrix indicated by the PMI, by referring to a codebook not shown.

Moreover, the control section 301 controls power of downlink signals so that the downlink signals to the above-mentioned plurality of user terminals (paring terminals) properly undergo non-orthogonal multiplexing (power multiplexing).

Further, based on the CQI transmitted from each user terminal 20 as feedback, the control section 301 controls the MCS applied to the downlink signal to each user terminal 20. Furthermore, based on the RI transmitted from each user terminal 20 as feedback, the control section 301 controls the rank (the number of layers) applied to the downlink signal to each user terminal 20.

Based on instructions from the control section 301, the transmission signal generating section 302 generates downlink signals to output to the mapping section 303. The transmission signal generating section 302 is capable of being comprised of a signal generator, signal generating circuit or signal generating apparatus explained based on the common recognition in the technical field according to the present invention. Further, the transmission signal generating section 302 is capable of actualizing the data buffer section, turbo coding section, data modulation section, multiplying section, power adjusting section, non-orthogonal multiplexing section and the like in FIG. 2.

The transmission signal generating section 302 performs modulation · coding on the downlink signal to each user terminal 20 with the MCS determined by the control section 301. Further, the transmission signal generating section 302 multiplies each of the downlink signals to the paring terminals by the precoding matrix determined by the control section 301.

Based on instructions from the control section 301, the mapping section 303 maps the downlink signal generated in the transmission signal generating section 302 to predetermined radio resources to output to the transmission/reception section 103. Further, the mapping section 303 performs non-orthogonal multiplexing (power multiplexing) on the downlink signals to the paring terminals determined by the control section 301 to output to the transmission/reception section 103. The mapping section 303 is capable of being comprised of a mapper, mapping circuit or mapping apparatus explained based on the common recognition in the technical field according to the present invention. The mapping section 303 is capable of actualizing the multiplexing section in FIG. 3.

The received signal processing section 304 performs reception processing (e.g. demapping, demodulation, decoding and the like) on the received signal input from the transmission/reception section 103. Herein, for example, the received signal is an uplink signal (uplink control signal, uplink data signal, uplink reference signal and the like) transmitted from the user terminal 20. The received signal processing section 304 is capable of being comprised of a signal processor, signal processing circuit or signal processing apparatus explained based on the common recognition in the technical field according to the present invention.

The received signal processing section 304 outputs information decoded by the reception processing to the control section 301. The received signal processing section 304 outputs the received signal and signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, the measurement section 305 may measure received power (e.g. RSRP (Reference Signal Received Power)), received quality (e.g. RSRQ (Reference Signal Received Quality)), channel state and the like of the received signal. The measurement result may be output to the control section 301.

### (User terminal)

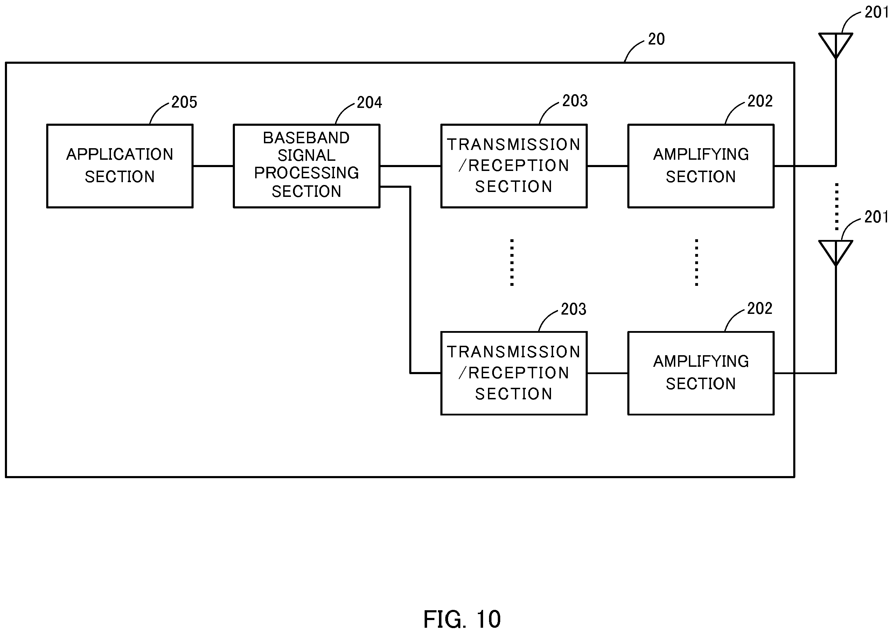

FIG. 10 is a diagram showing one example of an entire configuration of the user terminal according to this Embodiment. The user terminal 20 is provided with a plurality of transmission/reception antennas 201, amplifying sections 202, transmission/reception sections 203, baseband signal processing section 204, and application section 205. In addition, with respect to each of the transmission/reception antenna 201, amplifying section 202, and transmission/reception section 203, the user terminal is essentially configured to include at least one or more.

Radio-frequency signals received in the transmission/reception antennas 201 are respectively amplified in the amplifying sections 202. Each of the transmission/reception sections 203 receives the downlink signal amplified in the amplifying section 202. The transmission/reception section 203 performs frequency conversion on the received signal into a baseband signal to output to the baseband signal processing section 204. The transmission/reception section 203 is capable of being comprised of a transmitter/receiver, transmission/reception circuit or transmission/reception apparatus explained based on the common recognition in the technical field according to the present invention. In addition, the transmission/reception section 203 may be comprised as an integrated transmission/reception section, or may be comprised of a transmission section and reception section.

The transmission/reception section 203 receives information on candidates for downlink transmit power from the radio base station 10. For example, the transmission/reception section 203 may receive information indicative of all candidates for transmit power capable of being set on the user terminal 20, may receive information to identify a plurality of candidates for transmit power targeted for feedback, or may receive information on candidates for transmit power which the user terminal 20 belonging to some group searches for.

The transmission/reception section 203 receives, from the radio base station 10, the downlink signal determined based on the CSI on a plurality of candidates for transmit power. For example, the downlink signal is non-orthogonally multiplexed with a downlink signal to another user terminal 20, while being multiplied by the same and/or different precoding matrix as/from that of the downlink signal to another user terminal 20. Further, the transmission/reception section 203 may receive information on transmit power applied to the downlink signal to the terminal from the radio base station 10.

The transmission/reception section 203 receives the DCI on the PDCCH. The DCI may include the CSI request field. Further, the transmission/reception section 203 receives higher layer control information. As described above, the higher layer control information may include the instruction information indicating CSI on a plurality of candidates for transmit power for the user terminal 20 to transmit, and information on the correspondence relationship between a value of the CSI request field and CSI on a predetermined candidate for transmit power.

The transmission/reception section 203 transmits the CSI on a plurality of candidates for transmit power to the radio base station 10. The transmission/reception section 203 may transmit a plurality of PMIs as the CSI on a predetermined candidate for transmit power to the radio base station 10. Further, in addition to a plurality of PMIs, the transmission/reception section 203 may transmit a plurality of CQIs that respectively corresponds to the plurality of PMIs to the radio base station 10. Furthermore, in addition to the above-mentioned plurality of PMIs, the transmission/reception section 203 may transmit a plurality of/single RI that corresponds to the above-mentioned plurality of PMIs to the radio base station 10. Then, the transmission/reception section 203 may transmit the above-mentioned plurality of PMIs, the above-mentioned plurality of CQIs, and the above-mentioned plurality of/single RI.

In addition, the transmission/reception section 203 may transmit the CSI on a plurality of candidates for transmit power in different subframes for each candidate for transmit power, or may transmit in a single sub frame.

The baseband signal processing section 204 performs FFT processing, error correcting decoding, reception processing of retransmission control and the like on the input baseband signal. User data on downlink is transferred to the application section 205. The application section 205 performs processing concerning layers higher than physical layer and MAC layer, and the like. Further, among the downlink data, broadcast information is also transferred to the application section 205.

On the other hand, for user data on uplink, the data is input to the baseband signal processing section 204 from the application section 205. The baseband signal processing section 204 performs transmission processing of retransmission control (e.g. transmission processing of HARQ), channel coding, precoding, Discrete Fourier Transform (DFT) processing, IFFT processing and the like to transfer to the transmission/reception sections 203. Each of the transmission/reception sections 203 converts the baseband signal output from the baseband signal processing section 204 into a signal with a radio frequency band to transmit. The radio-frequency signals subjected to frequency conversion in the transmission/reception sections 203 are amplified in the amplifying sections 202, and transmitted from the transmission/reception antennas 201, respectively.

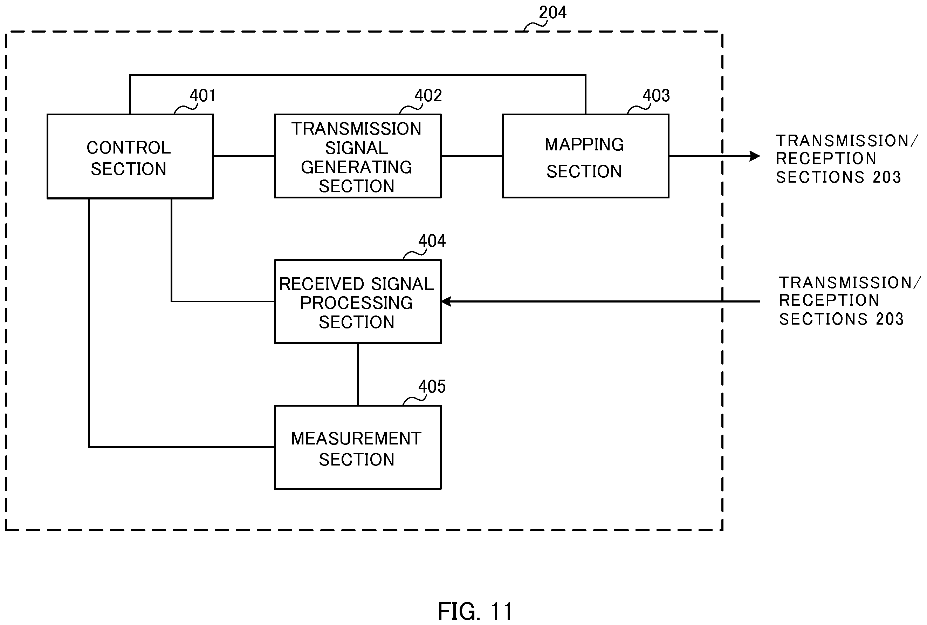

FIG. 11 is a diagram showing one example of a function configuration of the user terminal according to this Embodiment. In addition, FIG. 11 mainly illustrates function blocks of a characteristic portion in this Embodiment, and the user terminal 20 is assumed to have other function blocks required for radio communication. As shown in FIG. 11, the baseband signal processing section 204 that the user terminal 20 has is provided with a control section 401, transmission signal generating section (generating section) 402, mapping section 403, received signal processing section 404, and measurement section 405.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, and assignment of signals by the mapping section 403. Further, the control section 401 controls reception processing of signals by the received signal processing section 404, and measurement of signals by the measurement section 405. In addition, the control section 401 is capable of constituting a part of the generating section according to the present invention.

The control section 401 acquires the downlink control signal (signal transmitted on the PDCCH/EPDCCH) and downlink data signal (signal transmitted on the PDSCH) transmitted from the radio base station 10 from the received signal processing section 404. Based on the downlink control signal, a result of judging necessity of retransmission control to the downlink data signal and the like, the control section 401 controls generation of the uplink control signal (e.g. receipt conformation signal (HARQ-ACK) and the like) and uplink data signal.

Further, the control section 401 determines the CSI on a plurality of candidates for transmit power to transmit to the radio base station 10 as feedback. For example, the control section 401 may determine to transmit the CSI on all candidates for transmit power as feedback, based on higher layer signaling notified from the radio base station 10.

The control section 401 is capable of limiting (restricting) CSI feedback targets based on predetermined information. Specifically, the control section 401 may control candidates for transmit power that are feedback targets, by comparing the CQI calculated from the measurement result of the measurement section 405 with a predetermined threshold notified from the radio base station 10. The control section 401 notifies the transmission signal generating section 402 of candidates for transmit power of CSI to transmit as feedback, and is capable of controlling so as to generate the CSI on a predetermined candidate for transmit power.

Further, the control section 401 may control candidates for transmit power that are feedback targets, based on the position of the terminal. In this case, the control section 401 may be provided with a system, circuit, apparatus and the like such as the GPS (Global Positioning System), gyroscopic sensor, compass, laser range scanner (laser scan sensor), radio beam (radar) and thermography to acquire the position information.

As the CSI transmitted as feedback, the control section 401 may select the best CSI for each candidate for transmit power, based on the propagation environment measured by the measurement section 405, or may select a plurality of pieces of CSI for each candidate for transmit power. For example, as a plurality of pieces of CSI on a predetermined candidate for transmit power, the control section 401 may select the best CSI and the second best CSI. Further, being not limited thereto, as a plurality of pieces of CSI on a predetermined candidate for transmit power, the control section 401 may notify of from the best CSI to nth (n≥2) CSI.

Further, the control section 401 may control the transmission signal generating section 402 and the mapping section 403 so as to periodically transmit a plurality of pieces of CSI determined as described above in respective different subframes (Aspect 1, FIG. 5).

Furthermore, based on the bitmap (also called code Book Subset Restriction) included in the higher layer control information, the control section 401 may determine a plurality of pieces of CSI (PMIs) to transmit to the radio base station 10 as feedback (Aspect 2). Still furthermore, the control section 401 may determine the CQIs and/or the RIs that correspond to the PMIs.

Moreover, in the case of receiving the DCI including the CSI request field, the control section 401 may control the transmission signal generating section 402 and the mapping section 403 so as to transmit a plurality of pieces of CSI using the PUSCH indicated by the DCI (Aspect 3).

Further, based on the instruction information (higher layer control information) indicating which PMI is required by a value of the CSI request field and the value of the CSI request field included in the DCI, the control section 401 may determine CSI to transmit to the radio base station 10 as feedback (Aspect 4, FIG. 6). The control section 401 may control the transmission signal generating section 402 and the mapping section 403 so as to transmit the determined CSI using the PUSCH indicated by the above-mentioned DCI.

In addition, as the CSI on a predetermined candidate for transmit power, in addition to a plurality of PMIs, the control section 401 may control so as to transmit a plurality of CQIs that respectively corresponds to the plurality of PMIs, transmit a plurality of/single RI that respectively corresponds to the plurality of PMIs, or to transmit a plurality of CQIs and a plurality of/single RI.

Based on instructions from the control section 401, the transmission signal generating section 402 generates uplink signals to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal concerning the receipt conformation signal (HARQ-ACK) and channel state information (CSI). When the transmission signal generating section 402 is instructed to generate CSI on a predetermined candidate for transmit power from the control section 401, the section 402 selects the CSI to generate. Further, based on instructions from the control section 401, the transmission signal generating section 402 generates the uplink data signal. For example, when a UL grant is included in the downlink control signal notified from the radio base station 10, the transmission signal generating section 402 is instructed to generate the uplink data signal from the control section 401.

Based on instructions from the control section 401, the mapping section 403 maps the uplink signal generated in the transmission signal generating section 402 to radio resources to output to the transmission/reception section 203. The mapping section 403 is capable of being comprised of a mapper, mapping circuit or mapping apparatus explained based on the common recognition in the technical field according to the present invention.

The received signal processing section 404 performs reception processing (e.g. demapping, demodulation, decoding and the like) on the received signal input from the transmission/reception section 203. Herein, for example, the received signal is the downlink signal (downlink control signal, downlink data signal, downlink reference signal and the like) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the reception section according to the present invention.

Further, the received signal processing section 404 is capable of actualizing the MMSE section, demodulation · decoding section, interference replica generating section, interference cancellation section and the like in FIG. 3. In addition, FIG. 3 illustrates the example of using the SIC type interference canceller such as the CWIC, but the invention is not limited thereto. The received signal processing section 404 is capable of also actualizing configurations using the R-ML and another scheme as the interference canceller.

In the case of receiving information on transmit power applied to the downlink signal to the terminal from the radio base station 10, the received signal processing section 404 is capable of performing reception processing such as interference cancellation based on the information.

The received signal processing section 404 outputs information decoded by the reception processing to the control section 401. For example, the received signal processing section 404 outputs the broadcast information, system information, higher layer control information, DCI and the like to the control section 401. Further, the received signal processing section 404 outputs the received signal and signal subjected to the reception processing to the measurement section 405.

The measurement section 405 performs measurement on the received signal. The measurement section 405 is capable of being comprised of a measurement device, measurement circuit or measurement apparatus explained based on the common recognition in the technical field according to the present invention.

For example, the measurement section 405 may measure received power (e.g. RSRP (Reference Signal Received Power)), received quality (e.g. RSRQ (Reference Signal Received Quality)), channel state (propagation environment) and the like of the received signal. Further, the measurement section 405 calculates the CQI for each wideband and/or for each sub-band. Herein, the measurement section 405 may calculate a CQI of the case (or case of assuming maximum transmit power as downlink transmit power) of assuming that OMA is applied to the downlink signal, or may calculate a CQI of the case of assuming maximum downlink transmit power except P among a plurality of set candidates for transmit power.

The measurement result by the measurement section 405 is output to the control section 401. The measurement section 405 is capable of actualizing the channel estimation section in FIG. 3. In addition, the measurement section 405 may perform the above-mentioned measurement using one of the CRS, CSI-RS and other signal multiplexed into the received signal, or combination thereof.

In addition, in the above-mentioned Embodiment, as one example, the user terminal is assumed to receive the downlink signal using the NOMA scheme, but the invention is not limited thereto. As long as the downlink signal received in the user terminal is a downlink signal multiplexed (e.g. power-multiplexed) into the same radio resources as those of a downlink signal to another user terminal, the downlink signal may be any signal.

In addition, the block diagrams used in explanation of the above-mentioned Embodiment show blocks on a function-by-function basis. These function blocks (configuration section) are actualized by any combination of hardware and software. Further, the means for actualizing each function block is not limited particularly. In other words, each function block may be actualized by a single physically combined apparatus, or two or more physically separated apparatuses are connected by cable or radio, and each function block may be actualized by a plurality of these apparatuses.

For example, a part or the whole of each of functions of the radio base station 10 and user terminal 20 may be actualized using hardware such as ASIC (Application Specific Integrated Circuit), PLD (Programmable Logic Device), and FPGA (Field Programmable Gate Array). Further, each of the radio base station 10 and user terminal 20 may be actualized by a computer apparatus including a processor (CPU: Central Processing Unit), communication interface for network connection, memory, and computer-readable storage medium holding programs. In other words, the radio base station, user terminal and the like according to one Embodiment of the present invention may function as a computer for performing processing of the radio communication method according to the invention.

Herein, the processor, memory and the like are connected on the bus to communicate information. Further, for example, the computer-readable storage medium is a storage medium such as a flexible disk, magneto-optical disk, ROM (Read Only Memory), EPROM (Erasable Programmable ROM), CD-ROM (Compact Disc-ROM), RAM (Random Access Memory) and hard disk. Furthermore, the program may be transmitted from a network via an electrical communication line. Still furthermore, each of the radio base station 10 and user terminal 20 may include an input apparatus such as input keys and output apparatus such as a display.

The function configurations of the radio base station 10 and user terminal 20 may be actualized by the above-mentioned hardware, may be actualized by software modules executed by the processor, or may be actualized in combination of the hardware and software modules. The processor operates an operating system to control the entire user terminal. Further, the processor reads the program, software module and data from the storage medium onto the memory, and according thereto, executes various kinds of processing.

Herein, it is essential only that the program is a program for causing the computer to execute each operation described in the above-mentioned each Embodiment. For example, the control section 401 of the user terminal 20 may be actualized by a control program stored in the memory to operate by the processor, and the other function blocks may be actualized similarly.

Further, software, command and the like may be transmitted and received via a transmission medium. For example, when software is transmitted from a website, server or another remote source using wired techniques such as a coaxial cable, optical fiber cable, twisted pair and Digital Subscriber Line (DSL) and/or wireless techniques such as infrared, radio wave and microwave, these wired techniques and/or wireless techniques are included in the definition of the transmission medium.

In addition, the term explained in the present Description and/or the term required to understand the present Description may be replaced with a term having the same or similar meaning. For example, the channel and/or symbol may be a signal (signaling). Further, the signal may be a message. Furthermore, a component carrier (CC) may be called a carrier frequency, cell and the like.

Further, the information, parameter and the like explained in the present Description may be expressed by an absolute value, may be expressed by a relative value from a predetermined value, or may be expressed by another corresponding information. For example, the radio resource may be indicated by an index.

The information, signal and the like explained in the present Description may be represented by using any one of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Each Aspect/Embodiment explained in the present Description may be used alone, may be used in combination, or may be switched and used according to execution. Further, notification of predetermined information (e.g. notification of "being X") is not limited to notification that is performed explicitly, and may be performed implicitly (e.g. notification of the predetermined information is not performed.)

Notification of information is not limited to the Aspect/Embodiment explained in the present Description, and may be performed by another method. For example, the notification of information may be performed by physical layer signaling (e.g. DCI (Downlink Control Information), UCI (Uplink Control Information)), higher layer signaling (e.g. RRC (Radio Resource Control) signaling, MAC (Medium Access Control) signaling, broadcast information (MIB (Master Information Block), SIB (System Information Block))), another signal or combination thereof. Further, the RRC signaling may be called an RRC message, and for example, may be an RRC Connection Setup message, RRC Connection Reconfiguration message and the like.

Each Aspect/Embodiment explained in the present Description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802. 11 (Wi-Fi), IEEE 802. 16 (WiMAX), IEEE 802. 20, UWB (Ultra-WideBand), Bluetooth (Registered Trademark), system using another proper system and/or the next-generation system extended based thereon.

With respect to the processing procedure, sequence, flowchart and the like of each Aspect/Embodiment explained in the present Description, unless there is a contradiction, the order may be exchanged. For example, with respect to the methods explained in the present Description, elements of various steps are presented by illustrative order, and are not limited to the presented particular order.

As described above, the present invention is specifically described, but it is obvious to a person skilled in the art that the invention is not limited to the Embodiment described in the present Description. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2015-119634 filed on June 12, 2015, entire content of which is expressly incorporated by reference herein.

## Claims

1. A user terminal comprising:
a reception section that receives information on a candidate for downlink transmit power;
a generating section that selects a plurality of candidates for downlink transmit power to generate CSI (Channel State Information) on the plurality of candidates for downlink transmit power; and
a transmission section that transmits the CSI on the plurality of candidates for downlink transmit power.

2. The user terminal according to claim 1, wherein based on quality of a received signal and/or a position of the user terminal, the generating section selects the plurality of candidates for downlink transmit power.

3. The user terminal according to claim 2, wherein based on quality of a received signal and a predetermined threshold notified by higher layer signaling, the generating section selects the plurality of candidates for downlink transmit power.

4. The user terminal according to any one of claims 1 to 3, wherein the generating section generates a plurality of pieces of CSI on a predetermined candidate for downlink transmit power.

5. The user terminal according to any one of claims 1 to 4, wherein the transmission section transmits the CSI on the plurality of candidates for downlink transmit power in different subframes for each of the candidates for downlink transmit power.

6. The user terminal according to any one of claims 1 to 5, wherein in the case of transmitting the CSI, the transmission section transmits information on a candidate for downlink transmit power to which the CSI corresponds, together with the CSI.

7. The user terminal according to any one of claims 1 to 6, wherein the reception section receives downlink control information (DCI) including a CSI request field using a downlink control channel, and
the transmission section transmits at least a part of the CSI on the plurality of candidates for transmit power, using an uplink shared channel indicated by the DCI.

8. The user terminal according to claim 7, wherein the reception section receives information on a correspondence relationship between a value of the CSI request field and a candidate for downlink transmit power of CSI to report by higher layer signaling, and
the transmission section transmits CSI on the candidate for transmit power determined based on the value of the CSI request field included in the DCI and the correspondence relationship.

9. A radio base station comprising:
a transmission section that transmits information on a candidate for downlink transmit power to a given user terminal;
a reception section that receives CSI (Channel State Information) on a plurality of candidates for downlink transmit power from the given user terminal; and
a control section that controls transmission processing of a downlink signal to the predetermined user terminal, based on the CSI on the plurality of candidates for downlink transmit power.

10. A radio communication method including:
receiving information on a candidate for downlink transmit power;
selecting a plurality of candidates for downlink transmit power to generate CSI (Channel State Information) on the plurality of candidates for downlink transmit power; and
transmitting the CSI on the plurality of candidates for downlink transmit power.
